# EUROPEAN PATENT SPECIFICATION

(11) **EP 1 274 545 B1**
(45) Date of publication and mention of the grant of the patent: **21.06.2006**
(21) Application number: 01921659.7
(22) Date of filing: 20.04.2001
(51) Int. Cl.: B25B 13/50, B25B 13/44, B25B 13/46

(54) **IMPROVEMENTS TO MECHANICAL COUPLING DEVICES**
VERBESSERUNGEN AN MECHANISCHEN KUPPLUNGSVORRICHTUNGEN
AMELIORATIONS DE DISPOSITIFS DE COUPLAGE MECANIQUE

(30) Priority: 20.04.2000 GB 0009675
(43) Date of publication of application: 15.01.2003
(73) Proprietor: BALL BURNISHING MACHINE TOOLS LIMITED, Hatfield, Hertfordshire AL9 7QJ (GB)
(72) Inventor: LINZELL, Geoffrey, Robert, Brookmans Park, Hatfield AL9 7QJ (GB)
(86) International application number: PCT/GB2001/001802
(87) International publication number: WO 2001/081046

(56) References cited:
- EP-A- 0 279 899
- EP-A- 0 637 484
- WO-A-98/10899
- US-A- 4 676 125
- US-A- 4 945 791
- US-A- 5 902 360

## Description

This invention is concerned with improvements to object gripping tools or apparatus, to methods for improving the perfomance thereof, such as spanners, chucks, shaft couplings and the like for gripping objects like fasteners (nuts and bolts), work pieces, and drill bits, such apparatus being of a type wherein a gripper element is forced into contact with the object to be grasped and held there until released and to methods of gripping objects in which these is used such an apparatus. More specifically, the invention relates to gripping tools which rely for their operation upon pressing surfaces together under specific conditions to create high levels of static friction and also similar, or even higher, levels of dynamic friction, such that any incipient slip is stopped. Such gripping tools can be designed to facilitate particularly easy disassembly and re-assembly.

The invention relates to gripping tools. The term "tool", used in this context, means a device, such as a spanner or a chuck, which grips and holds some object. The thus-held object may itself be a tool - a drill bit, say, or a screwdriver blade - and hereinafter "tool" is used for both tools that grip and tools that are gripped, the context making it clear which is being considered in each case.

It is already common in many devices like spanners or pipe wrenches for the pressure between the gripping faces and gripped faces to be related to the torsional load that is applied to turn the gripped object In these apparatus, typical examples of which are shown in the specifications of European Patent Applications EP 0 279 899 and 0 637 484, which document describes the closest state of the cut to such apparatus and methods of claims 1, 2 and 8, and US Patent Specification 4,676,125, the grip can be made to relax automatically as the load is removed. The invention relates to improvements in such devices, and to novel designs of mechanical coupling devices that utilise this basic idea. Such coupling devices can be gripping tools that employ self tightening with relatively high cam contact angles which beneficially allows them to relax as drive is removed. In another form they can provide useful, non-slip yet easily undoable, coupling joints for torque transmission, which joints can be used to couple and uncouple items like drive shafts (or components onto shafts), where the gripped object must be released without damaging either it or the shaft.

More specifically, the invention firstly proposes a method of improving the performance of an object-gripping tool of the cam-operated gripper-element type, in which method there is applied to the gripper surface, and preferably one or both of the relevant cam and tool body surfaces, a friction-enhancing chemical. And it secondly proposes object-coupling apparatus which includes a body-mounted object-gripper together with a gripper-moving cam device having a cam member that is forced to bear against both the gripper and the body so as to urge the gripper into gripping contact with the object, the resulting friction between the body, cam member and gripper preventing the cam member reversing and the gripper releasing the object.

In one aspect, therefore, the invention provides a method of improving the performance of an object-gripping tool, according to independent claim 1, of the type wherein the object is held within a bounded object space in the tool by a gripper element operated by a cam device acting as a brace for the gripper element, in which method there is applied to the relevant gripper surface a friction-enhancing chemical such as to cause this surface to have between it and whatever it touches a similar or higher dynamic than static coefficient of friction.

In a second aspect the invention provides apparatus, according to independent claim 8, for gripping objects, which apparatus includes
a body,
an object space associated with the body and in which the object to be gripped is to be positioned, the object space having bounds restricting movement of an object therein,
a gripper element mounted on the body for movement relative thereto toward the object space, [so as to grip an object positioned in the object space],
a cam device carried by the body and including a cam member having a cam surface bearing on the gripper element and operable, upon the application of an operating force to the cam device, to move the gripper element toward the object space and then act as a brace for the gripper element, and
means for applying operating force to the cam device,
the relevant gripper element surface having between it and whatever it touches a similar or higher dynamic than static coefficient of friction, and in which method the object to be gripped is positioned in the object space of the apparatus and the requisite operating force is applied to the cam device such that the cam member bears against the gripper element so as to urge the gripper element into gripping contact with the object, to act as a brace and to press the gripper between the cam member and the object only so long as the force is applied.

And in a third aspect the invention provides a method of gripping objects, according to independent claim 2, in which there is used apparatus as just defined above, in which method the object to be gripped is positioned in the object space of the apparatus and the requisite operating force is applied to the cam device such that the cam member bears against the gripper element so as to urge the gripper element into gripping contact with the object, to act as a brace and to press the gripper between the cam member and the object only so long as the force is applied, the resulting friction between the apparatus' components preventing the cam member reversing and the gripper releasing the object.

In its primary aspect the invention provides a method of improving the performance of an object-gripping tool of the type having a cam-operated gripper element by applying to the relevant gripper surface a friction-enhancing chemical such as to cause this surface, which is smooth, to have between it and whatever it touches a similar or higher dynamic than static coefficient of friction. Where appropriate it is very preferable also so to treat the cam surface itself, and moreover also so to treat the touching body surface, both of which surfaces are also smooth.

The term "friction" is taken to mean the force required in overcoming the resistance to motion. In this Specification there are two conditions under which friction is identified: first, static - i.e. the force resisting the start of sliding motion - and second, dynamic - the force to maintain sliding motion. Conventionally, in apparatus using dry clean metal surfaces in firm contact their static friction is two or three times higher than that of their dynamic friction. Hence, conventionally, once motion starts the level of friction falls. However, after the required chemical friction enhancement is applied the static friction typically increases by 50%, and if slip occurs the dynamic friction, instead of being less, stays much the same or actually rises progressively above the static value until motion is arrested. Thereafter the static friction remains at the new, higher level. The actual level of friction increase may range from as little as 10% to as much as 200%.

The method of the invention depends for its function upon friction, and it is important to understand the factors that can influence friction. The actual level of friction obtained between two conventionally-prepared metal surfaces coming into contact will be largely determined by the material types, the pressure applied, and the presence on the surface of the material of contaminants that might act as a lubricant and reduce friction. Probably the common methods of preparing surfaces found on cams or a gripped object are made by metal cutting, for example turning, milling, broaching etc., and the associated metal finishing methods such as honing, grinding, lapping and polishing. On a microscopic scale what appears to the naked eye to be a well-prepared smooth surface is in fact relatively rough. It will comprise scattered high spots called asperities interspersed between lower undulating areas. Typically, two well-prepared machined and lapped surfaces coming into contact will in fact only make actual contact over about 1% of the apparent contact area. As the contact pressure is increased so this area rises towards 5% or more before some bulk deformation starts to occur. The clamping forces employed by the sort of gripping apparatus of the present invention therefore increase the actual contact area from about 1% to above 5%; however, once suitably treated this can rise to values approaching 10%.

If two similar dry, clean metal surfaces come into contact with a sufficient contact force applied normal to the surfaces, and without lateral motion, then plastic deformation and splitting of the natural protective oxide layer occurs at asperities as they are compressed. This exposes areas of new clean metal, and these clean metal areas will spontaneously weld and join if they touch. This effect is well known, and is referred to in the literature as Cold Pressure Welding.

The molecular level theory of friction is complex, and not well understood, but the basic behaviour and broad relationship between large area contacts and its relative independence of the magnitude of the apparent areas in contact is well established; it is that the force needed to overcome a resistance to motion between two rubbing surfaces is directly proportional to the pressure applied and is substantially independent of the contact area. The measured results are related by a constant for any given set of operating conditions and materials. This constant is denoted by the Greek letter µ, and called the Coefficient of Friction. If the coefficient of friction is increased the actual level of contact pressure can be reduced and yet still provide the equivalent grip to that achieved by conventional friction grip devices. It is the higher level of friction, created without changing the roughness of the surface or the dimensions of the gripper, that extends the scope of such gripping apparatus significantly.

The gripping apparatus described herein employs at least one but generally two surfaces that are either wetted with or have been treated with a chemical to raise the surface's natural coefficient of friction when pressed against another surface. As noted below, with the preferred chemicals this treatment is believed to raise friction because the chemicals act as oxygen scavengers - they release hydrogen, carbon and in some cases silicon atoms as the molecules are trapped, squeezed and damaged to a point where they are literally torn apart and the said elemental atoms are released between the pressed-together surfaces. During squeezing, microscopic asperities on both surfaces are deformed (in the extreme case, crushed), and their oxides split. The recovery - the re-forming - of the oxides is delayed due to oxygen scavenging at the individual sites of damaged asperities, thus raising actual frictional coupling. Furthermore, it is believed that elemental hydrogen released at the surface of a deforming asperity may, if in contact with clean, oxide-free metal, absorb and reduce the yield strength of the first few molecular layers of the deforming asperity, thus facilitating more than normal contact deformation. By these means static friction is increased without the surfaces being roughened, and without employing abrasive elements attached to either surface or placed between the surfaces to promote grip by mechanical means - and without utilising the serrations or other positive mechanical interlocks usually necessary to create very high levels of coupling.

The chemical used for friction enhancement may be any one (or more) of several known to increase friction. Although hydrocarbons are usually associated with lubricants, and indeed the long chain hydrocarbons exhibit an ability to hold and maintain metal surfaces apart and prevent asperity contact, thereby reducing friction, nevertheless some of the higher fractions - such as, for example, highly refined alkanes (paraffins) are incapable of maintaining such separation, and these are therefore vulnerable to being damaged when trapped at an asperity contact and mechanically crushed. If decomposed they would be expected to release elemental hydrogen. However, little is understood about the actual chemical mechanism involved with hydrocarbons. Some are nonetheless useful in the method of this invention for the purpose of raising friction. Other useful chemicals are low molecular weight materials, in particular solvents such as carbon tetrachloride, a chlorinated hydrocarbon which shows a marked tendency to raise friction between rubbing metal pairs (though this particular material is classified as hazardous, and is not recommended).

The safest and most predictable friction enhancers are certain siloxanes (also known as "silicones"), particularly the low molecular weight materials some of which show a very strong tendency to raise friction, again triggered by an inability to maintain mechanical separation between surfaces. The siloxanes most appropriate are those materials where single hydrogen atoms are used as side groups, usually referred to as intermediates because they are usually further processed by substituting organic material for the hydrogen side groups. These materials are copolymers that are relatively easy to breakdown mechanically with relatively low energy bonds between Si and H which makes for a very convenient friction enhancer. Accordingly, a preferred material for friction enhancement is a polydimethylhydrogen siloxane supplied by Dow Corning under the Mark DC 1107. It is a colourless essentially non-toxic fluid with a viscosity at 25°C of 30 mm²/s, and is suited for impregnating a sintered metal article.

On a crossed-bar friction test, in which a horizontal round bar is drawn along another at 90° so providing a single point sliding contact, the increase in the coefficient of friction for the single deforming asperity was consistently observed to increase by a factor of four with this DC 1107 material. Thus, if the measured dry coefficient of friction was 0.2 it was seen to rise to 0.8. However, actual friction tests using this material showed the real increase in friction to be not as high as this single asperity case. Measured improvements in grip ranged between 50 and 100% over dry conventional friction gripping devices.

In general, though, the silicone oils suitable for use as the friction-enhancing chemical may be of one or more many different types, and because their properties are not necessarily the same it may be advantageous to employ a mixture of several different oils carefully tailored to have the required physical and chemical properties, different materials possibly being used for different metals or combinations of metals. Individual polysiloxane oils may be linear, branched or cyclic molecules (or combinations) having a wide range of molecular weights and properties, though materials that are liquid and of relatively low viscosity (about 50 mm²/s or less, some as little as 10 mm²/s) are preferred, because they are easier to absorb into a sintered gripper element and appear to be more effective as friction enhancers. Typical examples of such materials are the medium molecular weight poly(dimethyl)siloxanes, especially those materials commercially available from Dow Corning under the Marks MS 200, and Dow Corning 344 and 345, all of which are fully described in the relevant Data Sheets. The MS 200 materials, which have many uses including that of lubricants, are siloxanes of the general formula

Si(R₃)-(O-Si[R₂])ₙ-O-Si(Rₐ)

wherein each R, which may be the same or different, is hydrogen or an organic radical, typically an alkyl or aryl group, such as methyl or phenyl, and n is an integer from 1 to about 2000. The 344 and 345 materials, normally used in cosmetic preparations, are respectively cyclic tetramers and pentamers of dimethylsiloxane.

When the friction-enhancement chemical is present, generally the force needed to cause cold pressure welds is more than halved, the reduction being due to the chemical action. It is important to understand that the term "cold pressure welds" is used here to describe individual asperity welds and not large area welds as may normally be associated with this term. The term "asperity cold pressure weld" describes a microscopic area ranging from of a few square microns up to a few hundred square microns. By introducing the chemical agent, the size and number of the asperity welds both increase - but relative to the apparent size of the contact area each asperity contact is still microscopic. However, the sum of the strengths of the enlarged individual microscopic welds provides a significantly higher level of resistance to lateral forces, this resistance to slip being the friction force (though the force able to break these cold pressure asperity welds is still fairly low when compared with the force required to slip a galled joint).

In its second aspect the invention provides apparatus for gripping objects, and a method of doing so using that apparatus. The apparatus includes a body, a bounded object space in which is positioned the object to be gripped, a gripper element mounted on the body for movement toward the object space, a gripper-element-moving and -bracing cam device, and means for applying operating force to the cam device. It is a crucial requirement for this apparatus to function properly that the touching surfaces of the cam and the gripper element, and possibly the other relevant surfaces of the body and the cam device, have between them a similar or higher dynamic than static coefficient of friction. All this is now discussed in more detail.

The invention provides a method and apparatus for gripping objects. The objects may be of almost any type. They may be single items such as tools (round parallel-shanked tools like drill bits, routers, milling cutters), fasteners (nuts, bolts, screws), components (stock being machined into shape, pulleys, gears), or shafts (torsional drives, say). They may also be collections or assemblies of items - a lathe chuck, for example.

The apparatus may grip or grasp the object in any suitable manner. Thus, it may "compress" a part by applying pressure onto some portion of the outside of the part to grip it (this is the case of a lathe chuck, for instance, or a ring spanner). Alternatively, it may "stretch" the part by applying pressure against some portion of the inside of the part (this is the case of a spigot device inserted into the open end of a tube to hold it). Typical examples of apparatus of these various types are described hereinafter with reference to the accompanying Drawings.

The body may be of any appropriate type, of any suitable size and shape, and of any satisfactory material capable of withstanding the forces involved. Typical bodies are made of strong forged steel for use in spanners, or a turned shaft, a turned or cast case, or a housing such as those formed by the functional components of a coupling, a part of a tool or tool holder like a chuck and so on. The common feature with all configurations of the apparatus is that a gripper is forced against the object being gripped - by a cam device - and the cam device reacts against the body or case housing the mechanical parts of the apparatus. Therefore, the body or housing must, under all operating conditions be strong enough to withstand the forces applied by the cam device as it reacts against the gripper.

The invention's apparatus has a gripper element - a gripper - mountable on the body for movement relative thereto so as to grip the chosen object. There may be a single gripper, as is found in some adjustable spanners (where the gripper holds the nut or bolt head in the case of spanners (this is particularly so where the object to be gripped is of a relatively soft material, and it is necessary to spread the load evenly over the largest possible area and thus avoid deforming the object). -Conventional chuck grippers are "V" shaped or rectangular, and the performance of these shapes is improved by chemical friction enhancement, but there is a risk that they will suffer from excessive wear unless treated with a wear resistant hard metal, because they have only one contact area. Another variety of gripper, overcomes this limitation because it has many contact areas and this has proved versatile in many applications, as will be seen in the Drawings discussed hereinafter, is of an object-unrelated shape; it is a simple cylinder (a short circular rod) that is rolled into position then temporarily jammed between the object and cam.

The gripper(s) can be made of any suitably strong solid material. Typical materials are metals such as steel and its alloys (tool steel in particular) because of their strength and durability (and the practical ease by which the grip of some metals can be improved with friction-enhancing chemical surface treatments) when gripping other metal objects. It should be noted, though, that sufficient friction is possible between ceramic materials and metals, and therefore the gripper can be made of a ceramic, and more specifically materials such as alumina, zirconia, silicon nitride, silicon carbide, aluminium nitride and tungsten carbide (or a coating thereof over a body of some other material). And of course if it is important to minimise surface damage then it may be beneficial to use relatively soft metals - to grip other soft materials, say - and aluminium has proved useful for this purpose.

The gripper elements should not be made of copper (or its alloys), zinc, or flake-cast iron, because these materials have some natural lubricity when rubbed against other metals, and the preferred friction enhancement chemicals have been found not to work satisfactorily with these materials.

As noted above, one shape of gripper that has proved versatile in many applications is a simple circular rod that is rolled into position and then jammed between the object and cam. Such roller grippers are advantageously made by compressing powdered tool steel into the near-finished shape, preferably using spherical grains, then sintering to form strong, hard porous bodies. Nickel is preferred as the alloying medium as opposed to copper (if copper is used its amount should not exceed 1% by weight of the initial mix; there are no known limits to the permissible levels of nickel). The sintered roller grips are then centreless-ground to control their dimensions. Such a sintered body will be porous, varying typically from 10 to 15% by volume porosity. These porous bodies are suitable for impregnating with the friction-enhancing material. An impregnated gripper made with hard steel has been shown easily to last the life of a typical application such as a self-tightening drill chuck, where a common durability test calls for 1,000 holes to be drilled in either a thick steel plate or hard masonry. The impregnated material was found to remain in the sintered body for the duration of the test using a 6 mm (0.25in) drill, and did not spin out due to centrifugal forces in devices operating up to 3,000 rpm.

The gripper(s) in the apparatus of the invention is mountable on the body for movement relative thereto to grip the object. There is a huge range of possibilities for the manner in which this mounting is effected, all of which depend to some degree on the nature of the body itself, and some of these are illustrated in the accompanying Drawings.

Although the basic function of the apparatus is common to all the examples that follow, it will be noted that the actual implementation does vary quite widely. Therefore, the apparatus can be said to have a range of configurations, and the actual use for which a particular apparatus is intended will determine which configuration is employed, which therefore determines the form a practical apparatus actually takes.

In the general case the apparatus comprises one or more gripper element arranged and movable within a shaped body. The actual gripper elements may be arranged axially along, or radially around, or pressed against a side face on, the item being gripped. In all cases at least one gripper element is free to move along at least one axis, guided first then pressed by a cam device against the item being gripped. There may be one or more cam members that are located between one or more grippers or jaws. In operation the cams first lightly guide and then bear against a movable gripper element and react against the fixed body of the apparatus, and exert a bracing force as they become wedged between the two. The wedging action creates sufficient contact pressure to initiate very high friction, the result of the chemical treatment of one or more of the relevant touching surfaces. The turning force applied to the apparatus - the invention is particularly appropriate for use with tool devices which are operated by the application of torsion - may be optionally employed to pre-position the moveable gripper elements in contact with the object being gripped.

The working parts of the cam device(s) - the cam body - are usually made of hard tool steel, and may beneficially be made using similar powder metal materials as described above for the grippers. However, in some configurations such as conventional chucks the cams take the form of machined parts, in which case they are made in annealed tool steel then hardened to provide the wear resistance and strength required. Hard materials have the advantage of wearing less;
than ductile metal. In the case of apparatus configured for gripping wheels or rotary saw blades, the cams differ slightly in construction although their function is still to drive the gripper onto the object and hold it there while drive is applied. In this case, back-to-back cam ramps rub against each other, the second cam face being part of the gripper, as is shown later by diagram. The interface between the cam and gripper must in this case be able to slide at all times. This is accomplished by making the cam of hard bronze to prevent high friction developing between the cam and the gripper, which is treated with the chemical friction enhancer.

The cam bearing surfaces are smooth, and comprise flats or curves so configured as to form an infinitely fine variable locking mechanism to move and control the gripper. The cam may employ relatively high contact angles - higher than normally used for natural locking with dry clean metal surfaces alone. The ability to use higher locking angles is the result of the chemical surface treatment that increases friction, and ensures that though the combination is locked while the operating force is applied it becomes unlocked as soon as the force is removed.

In the invention's apparatus the cam device is operable, upon the application of an operating force thereto, to move the gripper element toward the object space and then act as a brace for the gripper element, and there is means for applying the necessary operating force to the cam device. Basically, the apparatus is structurally designed so that some part of the applied load is used to hold the frictionally-coupled surfaces together. For example, if radial cams are used, as in the self-tightening chuck and couplings cases discussed hereinafter, then some part of the applied torsional load carried by the apparatus is used to force the surfaces together and create grip. Upon rotation, the cams drive the grippers onto the gripped object to provide a mechanical lock. If the cams are made symmetrical about a neutral point, then lock will occur under load in either direction of rotation. And with the load removed the lock is released at a neutral or central cam position. By exploiting this basic behaviour a useful dynamic self-tightening function is realised where grip is at all times related to the torsional load applied to the apparatus. Thus, the higher the load the greater the grip, and once the applied load is removed the grip relaxes completely - providing the cam contact angles within the apparatus are inherently non-locking. The term "non-locking" is used herein to mean that the cams to not bind so tightly that they do not release when the external load is removed (if the angles are relatively small then the body/cam/gripper combination may jam "permanently"; if they are relatively large then they will bind temporarily, and because of the friction enhancement, but free off when the load is removed).

The apparatus of the invention is one for gripping objects, and might be said to have two basic forms. The first is one in which a plurality of gripper elements is arranged in a circular pattern; such an apparatus is conveniently therefore referred to as a radial device. It is useful for gripping items like fasteners, such as hexagon nuts or bolts, in the manner of a ring spanner. It is also suitable for gripping smooth shaft devices, and for coupling components thereto. Also in this radial configuration it is useful as a self-tightening chuck for holding parallel-shank tools like drill bits, routers and milling cutters. The same principle is used for coupling elements onto shafts for power transmissions.

The second configuration is one where the grip is developed along the axis of a shaft by pressing against the side face of a wheel or part, and such a device is conveniently referred to herein as an axial device. Here the grip force may be developed against an undercut or thread at the end of a shaft, for example. This axial configuration is useful for gripping wheel-like tools such as rotary-saw blades, abrasive cutting discs, or grinding wheels.

Examples of both the radial and axial device types are discussed in more detail hereinafter.

The apparatus of the invention uses a cam device to move the gripper element into contact with the body to be held. An important advantage of using a cam to adjust an apparatus is the speed at which adjustment can be made when compared with a device employing a much slower screw adjustment, as is commonly used in open-ended adjustable "C" spanners and in conventional key and keyless chucks.

Hitherto the practical use of cams within apparatus used for these purposes has been limited because of the difficulty of creating sufficiently stable grip at high lock-up angles. As already noted, by employing friction-enhanced cams there may be used higher contact angles, and the actual adjustment can essentially be combined with the action of applying a load in a seamless action. Thus, in the case of spanners they appear to have an almost spontaneous self-adjusting feature as the action of setting the adjustment can be combined with the application of torque to turn a fastener (this too is discussed further hereinafter). In the case of cam-actuated chucks they are quick acting, and may be designed to traverse from their minimum to maximum size of gripped object in as little as a quarter turn of their control surfaces. Also, the actual tightening can occur as drive torque is applied. Thus, a drill bit might simply be pressed between lightly-sprung closed jaws. and as soon as drive torque is applied the grip develops, just sufficient to overcome the load resistance. Upon removing the drive the grip relaxes, and the drill bit can be removed without the need for undoing anything. Likewise, quick-release change mechanisms can be devised for high-torque uses such as attaching saw blades to power tools. Here, a cam is incorporated so that it acts to increase axial contact pressure against the saw blade should it slip, and the extra pressure arrests the slip.

The method and apparatus of the invention work because it is possible to ensure a high locking angle between the cam and gripper element (and preferably between the body and the cam); this results from the increase in friction achieved by treating the functional surfaces selectively with a friction-enhancing chemical. As the treated surfaces come into contact, and under high point-contact loads, the surfaces do not slide readily but instead develop very high levels of static friction and grip. The structural mechanisms within the apparatus are then designed to provide relatively light contact loads to allow the gripper elements to move (roll) into a position where they become tightly jammed (but in a non-locking, temporary fashion), holding the gripped object securely, and where they are kept in the jammed position only so long as the external operating load is maintained (together with any internally-generated force that is the result thereof). This jamming, or *temporary* locking action, is the result of an increase in friction (and the applied external force); when the applied force is removed the mechanism readily unlocks - unjams - and the gripped object is released.

The matter of locking and non-locking systems can perhaps be better understood from the following.

Geometric shapes commonly used within mechanical couplings is tapered sleeves, bushes and shafts. These can be jammed together to form joins - for instance, a tapered circular pin rammed into a matching tapered bore, or a flat wedge rammed into a closing gap. In the case of a pin, if the surfaces are hard steel and dry then they will form a secure mechanical lock at an angle of below 4° inclusive. An example of this is the Morse Standard taper No. 5, being 3° inclusive, that is 1.5° to the centre line of a round part. Typical uses for these self-locking or self-holding tapers are in retaining large drill bits and milling tools in machine tool drive spindles.

At angles above 4° inclusive the dry metal taper tends not to lock, and does not behave as a dry friction joint unless it is held together by an externally-applied force. To transmit torsional power across such a coupling an axial force is needed, applied along its axis to press and hold the tapered surfaces together. The coupling is then determined by this external force and by the coefficient of friction between the surfaces. Making use of the invention's method, after applying friction enhancement to the tapered surfaces, and providing they are properly seated, it is found that for the same force pressing and holding the faces together the actual torque that can be transmitted without slip is more than doubled. The presence of the friction enhancer, however, can hinder proper seating if the taper is shallow.

By increasing friction with friction-enhancing materials it might be expected that the locking angle of the above mentioned axis-symmetric tapered joints would significantly increase, but this has not been found to happen - at least, not to the extent predicted by the principles of classical mechanics. This comment refers in particular to the behaviour of tapers between hard steel surfaces, but similar behaviour has been observed with cams in the method herein.

In the method (and apparatus) of the invention acceptable grip and holding (locking) occurs at relatively steep angles - up to 50° - but only providing the contact pressure is maintained holding the surfaces in close contact. And such surfaces will unlock and slip even at relatively shallow angles, as low as 6° (when jamming might be expected) when the external holding force is relaxed. This surprising behaviour is the key to making self-tightening devices in accordance with the invention. Without friction enhancement the same cams would typically slip even at contact angles of less than 10° because of the lower coefficient of friction.

It is perhaps interesting to note that mechanical gripping apparatus made *without* friction-enhanced locking elements tends to suffer from sudden loss of grip and the sudden violent release of strain energy when the limit of grip is reached under load. This is sometimes referred to as "snap-back". This behaviour is explained by the drop in dry conventional friction from the relatively high static to the much lower dynamic level. Apparatus of the invention, employing at least one friction-enhanced surface, has the great advantage of delaying the onset, and in most cases even preventing, snap-back because should slip start then the enhanced friction is maintained or even actually rises and slip ceases.

The invention is now described with reference to uses associated in particular with the gripping of small rotary objects like fasteners or tools in mechanisms such at adjustable spanners, chucks etc, and also with readily-uncoupleable joints as used to connect a drive shaft to a load such as a pump, a compressor or electrical generator.

Various embodiments of the invention are now described, though by way of illustration only, with reference to the accompanying diagrammatic Drawings in which:
- Figures 1A-H: shows a collection of structural configurations for apparatus of the invention;
- Figures 2A-D: show a design for a self-adjusting socket spanner derived from the axial cam concept shown in Figure 1A;
- Figures 3A-E: show a design for a quick grip and release action tool chuck of the invention;
- Figures 4A,B: show an alternative design for a quick grip and release action tool chuck of the invention;
- Figures 5A-C: show views of a roller-coupling device of the invention for coupling items to shafts;
- Figures 6A,B: show an example of an axial cam arrangement as used in a design for an adjustable ring spanner of the invention; and
- Figures 7A-D: show an example of an axial cam device in accordance with the invention.

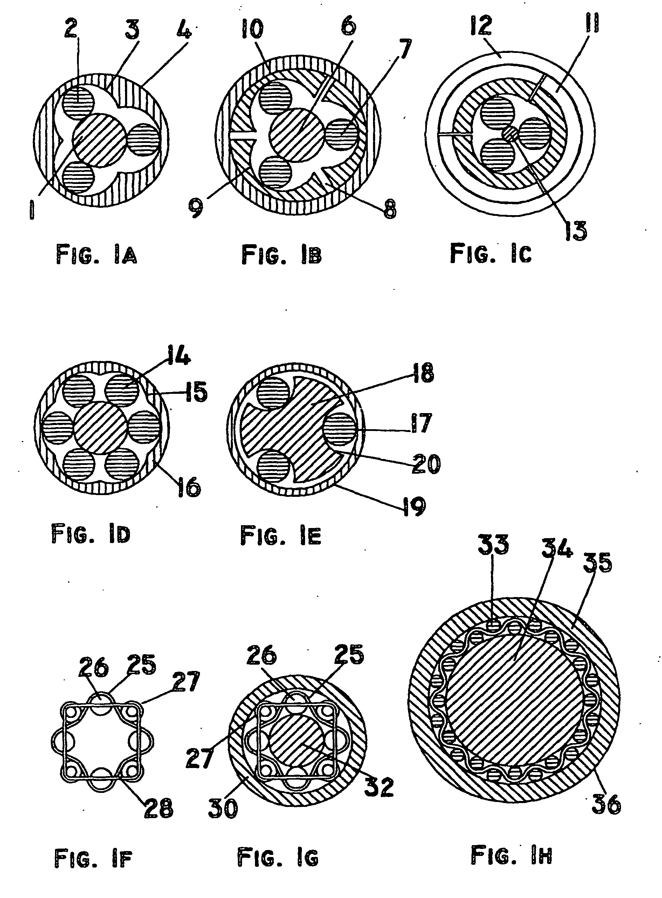

Figure 1A shows a cross section of an example of a radial configuration with a shaft (1: the object to be gripped, positioned within the object space) surrounded by three roller gripper elements (2) that are made of sintered steel and impregnated with a friction-enhancing chemical fluid. The roller grippers are trapped between the shaft and three minor arcs (3) cut into an outer restraining ring (4). The arcs 3 form the cam and the cam surfaces of the apparatus of the invention, while the ring 4 is the body of the apparatus (so in this case the body and cams are integral).

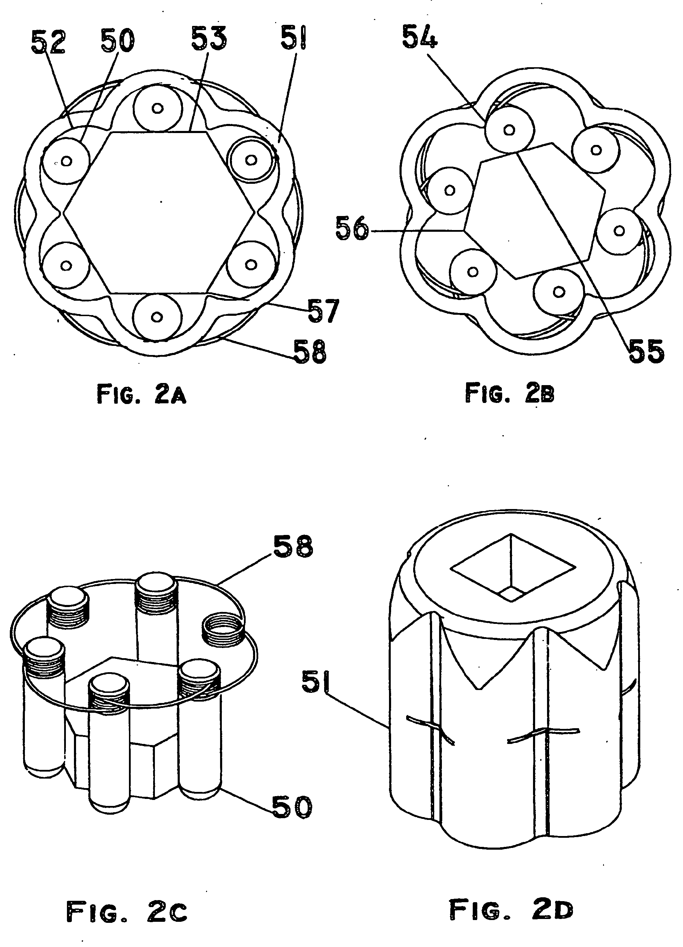

Although not shown, the rollers 2 need to be held in a cage, somewhat like the rollers in a roller bearing, to maintain their spatial relationship one to another (a suitable cage-like device is shown in Figure 2 discussed further hereinafter).

Typically the depth of such a device is roughly equal to the overall diameter, but it can be virtually and depth to suit the particular application.

The operation of the device is as follows. Assuming there is light contact between the parts shown, then upon relative radial motion between the cams 3 and the shaft 1, in either direction, the roller grippers 2 rotate and as they move laterally are forced inwards against the shaft 1 by the shape of the cams 3 to grip the shaft securely. The secure grip is the result of the rollers 2 having been treated to enhance friction; this prevents them slipping against the centre shaft 1 and locks them at relatively steep contact angles against the arcs 3 (the cam faces).

This basic construction constitutes a self-tightening gripping device, suitable for use as a chuck useful, for example, for gripping tool shafts or work-pieces. Generally such an assembly is loose when not carrying a load, so the shaft 1 may be slipped in and out with ease. As torque is applied (in either direction) the shaft is gripped and turned, and when the torque is removed the grip is relaxed so the shaft can be simply slid out.

Figure 1B shows an example of an improved radial gripper device with a shaft (6: the object) gripped by three impregnated roller gripper elements (7) running in split minor arcs (8: the cams) cut into a case or body (9) so the arcs can be biased open by spring action (not shown).

An outer parallel sleeve (10) is slid over the split cam/body 9, and this sleeve serves to close the assembly down to ensure the rollers 7 touch the shaft 6 and cams 9 uniformly prior to rotation. In practice a rubber or metal grip (not shown) is added to the outer sleeve 10, and a spring (not shown) is provided to retain the sleeve in the closed position, which may also provide a useful axial retention along the axis of the shaft, for instance to retain a drill and then to quickly release it when the sleeve is retracted.

Again, the rollers 7 need to be held in a cage to maintain their spatial relationship, but this is not shown because it over-complicates the diagrams.

Figure 1C uses a construction to similar to that of Figure 1B, except that the outer surface of the cams (11) are tapered to form the shape of conventional three-jaw chuck jaws. An outer sleeve (12) with a matching taper runs against the jaws to close them down onto different size shafts (13); this would normally be mounted by a thread to provide a function similar to a conventional keyed or keyless chuck as used on most power tools.

Each roller gripper is secured (in a cage coupled by guides, not shown, to the jaws) to maintain it on the centre of its jaw as it is tightened down onto the shaft.

As rotation is applied any slight rolling motion increases the grip as the individual rollers each rotate and jam between object and cam.

This construction overcomes the commonly-experienced tool slip associated particularly with keyless chucks.

Figure 1D illustrates an extension of the basic principle of the apparatus shown in Figure 1A. This construction employs six rollers (14) running in shorter minor arcs (15), so that the range of automatic adjustment is less than in the Figure 1A version. While the increase in the number of grippers does not necessarily increase the actual level of grip, it does improve concentricity, and provides very superior side loading characteristics, and this construction is useful as a self-tightening collet suited to holding tools like routers that experience high side loading.

Again the construction requires that these rollers be held in a cage (not shown) to maintain their spatial relationship.

This basic design can be improved in the same way as that of Figure 1B is improved over that of Figure 1A, by splitting the cam ring and with the introduction of an outer locking sleeve.

Figure 1E shows a cross-section view of a radial device for gripping round parts, but this configuration grips on the inside of a tubular object (19) instead of the outside (as is the case with the previously-discussed variants). Providing there is some minimal light contact between at least one roller (17) and the core (18: this is now the body, with its surfaces (20) being the cams), then, if there is minimal relative radial motion between the outer ring 19 and the central core 18, at least one roller will be forced out to grip the inside surface of the tubular object 19.

The rollers are again sintered, and impregnated with a chemical fluid that enhances friction as the roller grippers 17 rotate and role around within the minor arcs 20, which act to cam the rollers outward, pressing them hard against the inside face of the outer ring 19 and gripping it securely.

Again, the proportions of depth to diameter are typically 1:1. However, it is also possible that this ratio can be varied to make on the one hand a very flat assembly or a long thin one, depending upon its function.

It is again desirable to use a cage (not shown) to retain spatial relationship between the rollers, especially when good concentricity is required between the gripped part 19 and the cam block 18.

Further variations of this design are possible, rather like those of Figures 1B and 1C over that of Figure 1A. For instance, the inner cam block may be split into three equal sectors about a central bore. Upon driving a matching tapered pin into the tapered bore the cams are forced outwards, hence extending the gripped range and making the device suitable for gripping a wide range of internal diameters.

Figure 1F is an assembly of rollers arranged about a formed, shaped strip (25) which constitutes both the body of the apparatus and the cam device; its depth might typically range from one to three roller diameters. The rollers are arranged to alternate outside (27) and inside (26), and are maintained about the formed cam 25 by a tie (28).

The purpose of the variant of Figure 1F is to couple together two elements - one like a tube and the other like a rod fitting within the tube and extending there from. Figure 1G shows the assembly of Figure 1F slipped between a shaft (32) and a hub (30). The outer rollers (27) press outwardly against the hub 30 while the inner rollers (26) press inwardly against the shaft 32.

The cam 25 also acts as a spring to maintain the contact and take up tolerance variation between the shaft and hub.

Upon minimal radial motion between shaft and hub, the rollers 27,26 try to roll and jam between the cam 25 and respectively the shaft 32 and the hub 30. The friction-enhanced rollers prevent slip, and the assembly becomes a very strong coupling until the drive is relaxed, whereupon the roller assembly can be readily withdrawn from between the hub and shaft.

Figure 1H shows an extension of the principle of Figure 1G. Many more rollers (33) are employed to spread the load and reduce the risk of fatigue and fretting at the shaft (34) and hub (35) during use. The rollers are arranged symmetrically about the sine-wave cam (36). By increasing the number of rollers the load on the cam is spread and this allows a more flexible, springy cam, which is useful in pre-loading the rollers against their bearing surfaces and takes up greater tolerance variations. The heavily-damped spring cam also provides a useful cushion against mechanical shock.

Figures 2A-D show a design for a self-adjusting socket spanner derived from the axial cam concept shown in Figure 1A.

Figures 2A and 2B show end views (from either end) of the spanner. A series of hard steel roller gripper elements (50) made of hard slightly porous sintered metal and impregnated with a friction-enhancing chemical are arranged in an outer tough steel case (51: the body). They fit loosely into individual cam-surface arc segments (52) equally spaced around the inside of the case. The individual rollers are linked together by a flexible phosphor bronze spring (58: see also Figure 2C), and this allows the rollers to move and adjust their individual positions independently and fit onto a range of different size hexagon forms (53,56) that can be positioned within the object space. Figure 2A shows the arrangement with a maximum size hexagon, and Figure 2B shows it with the minimum size hexagon.

As a turning moment is applied to the spanner, in either direction, the individual rollers 50 roll around their arcs 52 within the case 51 until they become jammed between the case cam surfaces and the flats on the hexagon. As they jam, high levels of friction develop due to the friction-enhanced rollers, and they firmly grip the nut or bolt. The action is self-adjusting.

Figure 2C shows the arrangement whereby the individual rollers are inter-linked with a flexible spring. One roller is omitted to show more clearly how the spring is coiled to give the desired stability and flexibility, necessary first to locate the rollers about the flat faces of the hexagon and then to ensure the rollers remain reasonably parallel within their guiding arcs as the spanner adjusts down onto the hexagon form.

Figure 2D shows the outside view of the assembled spanner. The slots midway down the outer case are for the loops of the spring to engage in and thereby hold the individual rollers loosely within the case.

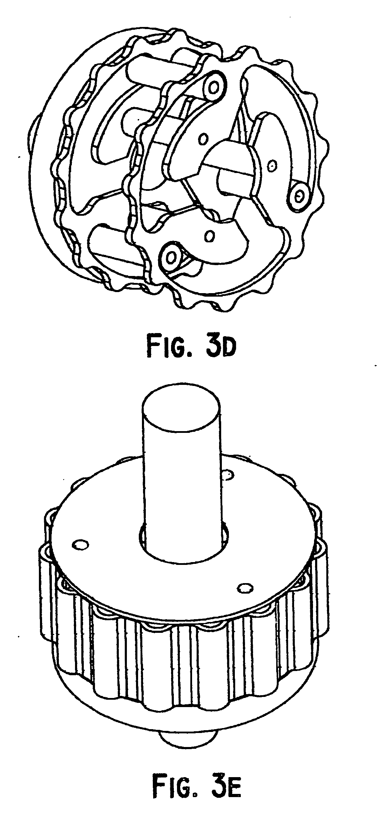

Figures 3A-E show a design for a quick grip and release action tool chuck. This is a design for a chuck for gripping a tool, derived from the basic configurations shown in Figures 1A-C. The chuck is suitable for use in hand tools, power tools or machine tools. The chuck depends for its function on moving from minimum to maximum tool diameter in about one quarter turn of the outer ribbed finger grip relative to the tool drive shaft.

Figures 3A,B show an end-on view of the functional elements within the chuck. A ring cam (61) is made from a parted-off section of bearing quality tube steel stock mechanically formed into a tri-lobe form as shown. The cam is then hardened and tempered to suit its duty. Three roller gripper elements (62) are arranged within the cam. The rollers are made of sintered steel with slight porosity; they are hard, and impregnated with a friction-enhancing chemical. The tool shank (63) locates at the centre of the rollers. As the rollers are rotated relative to the cam (64) they close down onto the tool. Figure 3A shows the maximum size tool shank (63), Figure 3B the minimum (67).

The ring cam is secured to the chuck's base by three locking posts (65). The rollers are retained at either end by a cage (shown generally in Figure 3D, (the actual rollers are omitted from this latter Figure to give a clearer view of the roller guides and the remainder of the cage construction). The cage is coupled to the outer ribbed finger wheel (66) so that when this finger wheel is turned the rollers 62 travel around inside the ring cam 61 and are forced down onto the tool shank 63/67. The direction of drive is arranged so that the greater the torque the harder the rollers are driven into the closing gap between the cam and tool shank. Thus, the driving force to the tool also enhances the grip onto the tool. A bias spring may be added to hold the chuck closed down so that a tool shank is lightly retained before drive is applied and after it is removed.

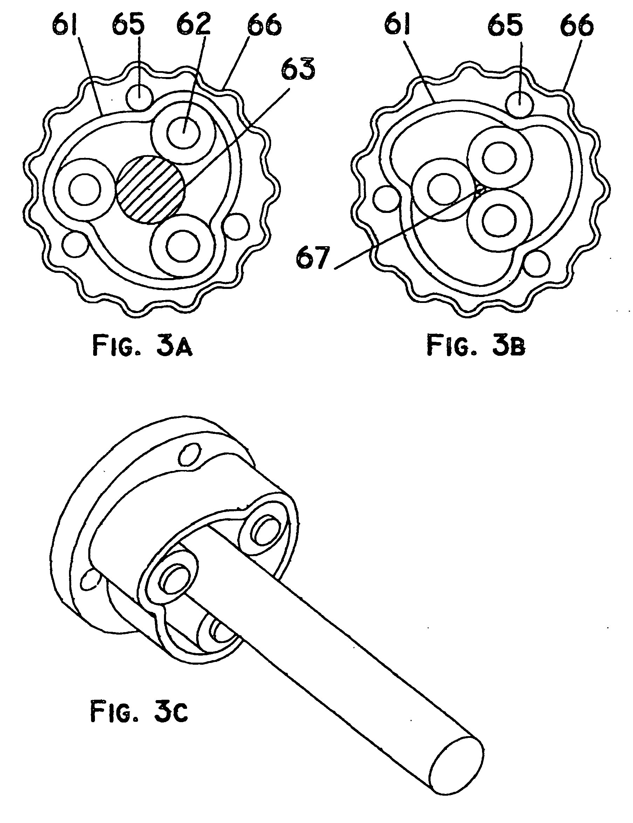

Figure 3C shows another general view of how the rollers are arranged relative to the ring cam and tool shank.

Figure 3D shows the upper and lower roller guides which constitute a cage to maintain the rollers relative spacing as the chuck is operated.

Figure 3E is an external view of a complete chuck assembly.

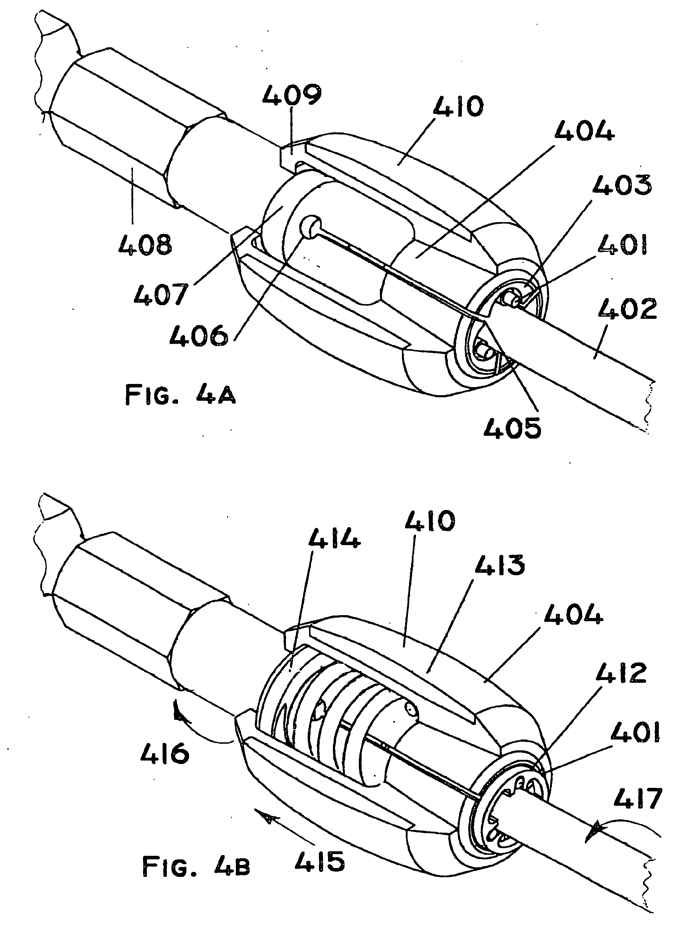

Figures 4A,B show in perspective view the structure of a quick-change self-adjusting chuck suitable for use with a power tool and based on the configurations in Figures 1A,B.

Figure 4A shows a cut away view of a partly-built chuck in which three hardened sintered tool steel roller gripper elements (401: only two can be seen) are positioned about a tool shank (402) and supported by three associated concave cams (403: again, only two can be seen). The three cam shapes are cut inside a hardened steel sleeve (404) machined from solid bar and whose end is tapered outwards, which sleeve has three slits (405) running the length of the hollowed-out section, each terminated with a cross hole (406: only one can be seen). A location grove (407) is provided for a split ring (not shown). The shank is continued (at 408) with either a hexagonal, threaded or tapered shaft for attachment to a power tool.

An outer sleeve (409) made from soft steel is arranged to slide against the taper at the back of the cams 403 on the inner sleeve 404. A metal, plastic or moulded rubber hand grip (410) is provided to operate the sleeve 409.

Figure 4B shows a cut-away view of the fully-built chuck. The rollers 401 are now shown held in a cage the front (412) of which can be seen (the ties and rear of the cage is hidden from view). A coil spring (413) presses against the split ring (414) to force the outer sleeve against the tapered surface 404 and drive the rollers 401 gently down onto the tool shank.

The tool shank is inserted by pulling the handle 410 on the outer sleeve in the direction of arrow (415), which frees the rollers 401 sufficiently for the tool shank 402 to pass between them and be positioned between the rollers and in light contact as the handle 410 is released.

Upon applying torque (arrow 416) and a reaction load (arrow 417), the cams 403 turn and the rollers 401 are rolled into the closing gap between the cam arc and shank, which jams them against the shank (the concave cams 403 are constrained by the spring-loaded outer sleeve 409 that is held by spring force against taper face 404). Upon removing either the drive torque 416 or the reaction load torque 417 the force jamming the rollers falls, and grip is relaxed sufficiently for the tool shank 402 to be withdrawn from the chuck as the outer handle 410 of the chuck is operated (415).

The rollers 401 are held in a cage made of phosphor bronze, used because it is unaffected by the friction-enhancing chemical, arranged rather like roller bearing elements, to maintain their relative positions and ensure they move in correct relation to each other and maintain concentricity. The rollers are impregnated with a friction-enhancing agent (DC1107 is preferred). This design produces typically 50% more grip than a conventional keyless power-tool chuck, and takes less than 20% of the time on average to change a tool compared with a convention keyed or keyless chuck.

For practical purposes the tool shanks may be made a standard diameter so a range of different size tools such as drills may be used in this convenient low cost quick change chuck.

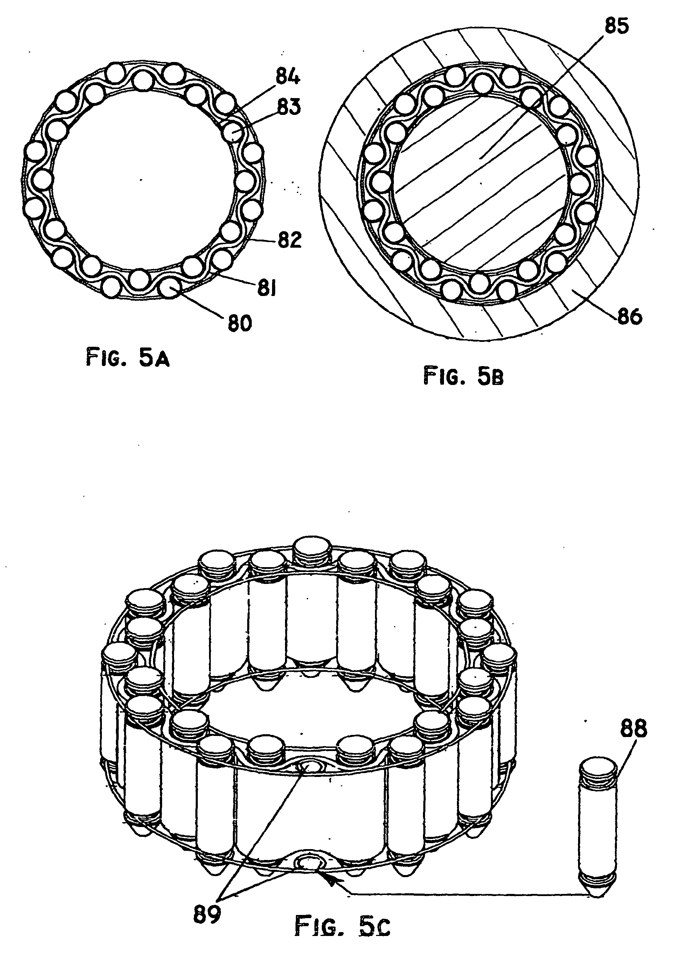

Figures 5A-C show views of a roller-coupling device for coupling items to shafts. It is basically the device show in Figures 1F-1H.

This variant of the apparatus of the invention is designed as a substitute for precision tapered bushes, sometimes referred to as taper-lock or cone-clamping devices. Typically such devices employ many clamping screws arranged radially around one end to draw one tapered element over another in such a way that they expand to fill the gap between a shaft and a body being secured to that shaft. The practical difficulty of creating the optimum contact pressure by torquing the bolts is time consuming and prone to error. The advantage of the invention's design is that it is self-tightening in a way that creates just enough strength to resist the applied load at any time, and then upon removing the load the grip is relaxed to a level where the coupling is relatively easily removed, without the need to undo many bolts.

Figure 5A shows an end-on view of the apparatus. A plurality of sintered hard steel roller gripper elements (80) are arranged alternately about a formed sinusoidal cam (81) arranged so all the rollers on the outside of the cam are linked by a bronze or steel wire looped around each roller in turn (82) while all the rollers on the inside (83) are linked by another wire loop (84).

The sinusoidal cam is made by parting off a ring from a tube made of bearing or spring steel. The form is then rolled into the ring before heat treating to give the right temper. The assembly thus has a springy nature, and is therefore compressible to facilitate insertion between a steel shaft (85) and hub (86) as shown in the end-on view of Figure 58.

The perspective view shown in Figure 5C shows the general proportions of a typical coupling. The individual pin (88) is depicted removed, to show how a wire is coiled into the grove both ends of the roller. Note also the roller is tapered at the insertion end to facilitate assembly.

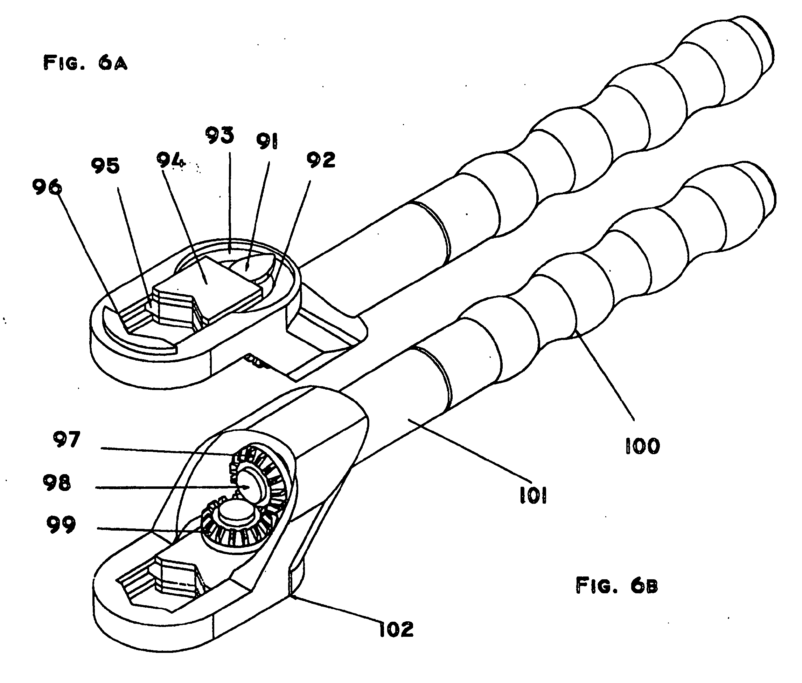

Figures 6A,B show in perspective view (respectively from above and from below) an example of an axial cam arrangement as used in a design for an adjustable ring spanner.

The spanner comprises a head (103) and a handle (100). The head has a suitably strong forged alloy steel body (102) formed into an elliptical or squashed ring shape, part of which is the space into which the object to be manipulated is in use positioned, and then machined to shape.

Two hard metal semi-porous eccentric cams (91) which are shown roughly pear-shaped but may be another shape (or even an off-centre circle), are coupled, one to the top and one (not visible) to the bottom, to a circular disc (92) that locates into a precision-machined recess (93) in the head; this forms the cam device. The cam profile runs against the back edge of a hard steel block (94) whose front edge forms the adjustable width jaw - the gripper element - of the spanner.

The sliding block 94 is guided by a projecting lateral flange (95) in an under-cut on either side of the head's inner surface. The guide can be of a different copper-carrying metal to prevent unwanted seizure. An optional spring can be incorporated to open the jaws, and this can be included near this slide-way (but to minimise complexity it is not shown). As the cam rotates, the jaw closes towards the outer fixed jaw (96: the opposing side of the body's head).

The cam device is coupled to the handle 100 *via* a shaft (98) guided by a bush (101) to a drive bevel gear (107). The driven bevel gear (108) is coupled directly to the cam device. Half a turn of the handle grip in either direction will fully traverse the jaw 94 over its entire adjustment range.

In use, the spanner is placed over the hexagon nut or bolt head, and the hand grip is twisted at the same time as a turning moment is applied to the lever/handle. The turning moment causes a rise in contact pressure at the point where the cam 91 contacts the sliding jaw 94, and especially where the circular disc 92 contacts the outer case 93. The friction at these points rises rapidly as torque is applied to the spanner handle, this friction being a reaction force due to the applied torque. This force will actually lock the spanner mechanism because the contact points are treated with a friction-enhancing material impregnated into the porous cams and the circular disc. The greater the turning moment the greater the locking affect, and, the cam and disc acting as a brace, the spanner behaves as if it were a solid.

The combination of the turning and twisting action on the handle, in either direction, adjusts the size to fit any hexagon within its adjustment range. In use the spanner is perceived to have an automatic sizing capability because invariably a hand-applied gripping and turning action also contains some involuntary twist, and therefore adding up to a half turn twist is very practical and gives a good tactile feel to the operator.

The effectiveness of the design shown is improved by making the upper and lower cams counter-rotate, because the contacts then tend to balance and work against each other brace fashion. This is relatively easily achieved by adding a third bevel gear above the present two and coupling it down through a hollow shaft to the lower cam.

The increase in friction between the disc and case facilitates improvements in the design and function of several conventional tools. For example, high leverage wrench or clasp type spanners often employ a screw adjuster or worm gears to set the jaw width. This is common in adjustable spanners, or wrenches or pipe grips that are often referred to as Stilsons. In yet another design a screw adjuster is employed to pre-set an over-centre lever or cam locking device (these are often called "Mole" grips). A high friction cam can often be substituted for the screw adjuster in these designs, and this speeds the size adjustment action.

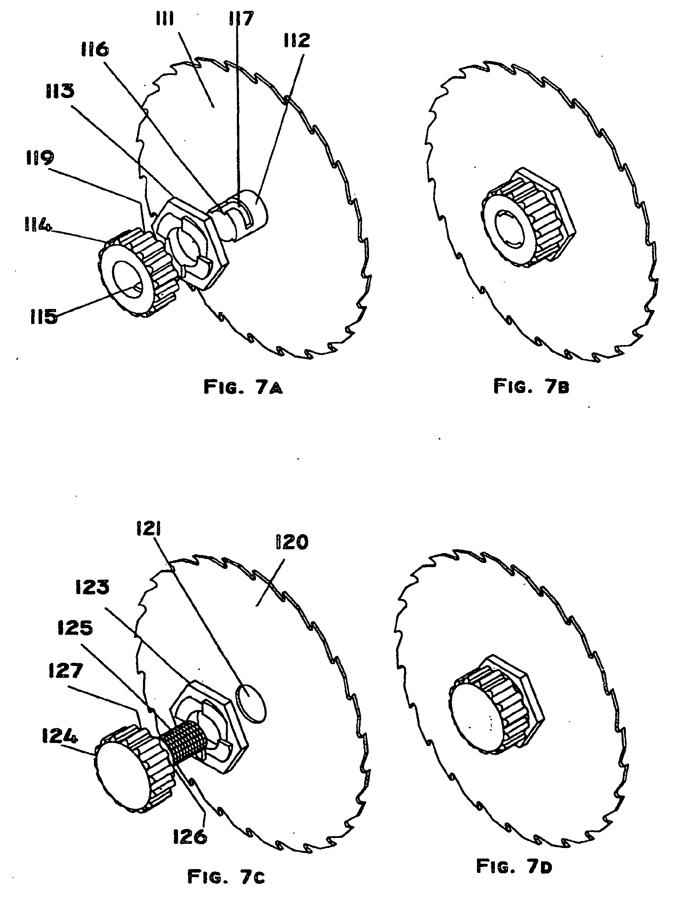

Figures 7A-D show examples of axial cam devices in accordance with the invention - for coupling rotary saw blades using a self-tightening device that allows hand mounting without the otherwise essential use of spanners or wrenches adequately to tighten then afterwards undo the blade to change it.

Figures 7A,B show an arrangement for a quick-coupling device for mounting and securing a flat rotary tool like a saw blade to the drive shaft of a power tool. This arrangement depends for its function on enhanced friction grip between washers placed either side of the tool about its centre hole, the result of pressure provided by cams incorporated in the design.

The washer at the back is not visible in the Figures. It may be whatever is used conventionally, and indeed it may form part of a safety guard bearing. The treatment of this washer, or the supporting face behind the blade (not shown), with a friction-enhancing chemical is optional but desirable.

In this embodiment the washers are pressed or driven hard against the tool by cams reacting to any difference between the driving force from the shaft and the load on the blade. Any slip of the blade causes the friction-enhanced ramped cam washer to adjust relative to the anchor nut, and thus to apply more pressure to the frictional coupling until slip is eliminated. The cam angles are chosen to be about or slightly higher than those of a conventional bolt thread. The actual friction between the washer and the blade is more than double, and if the surfaces are clean and smooth, may be up to about four times, that of conventional dry clean surfaces. The friction between the nut and washer is much lower due to the materials used. The net result, providing the surfaces are clean, is that this provides improved grip over a conventional screw assembly, and can be changed in only of fraction of the time needed by the industry-standard screw method.

More specifically, the blade (111) is placed onto a machined stub shaft (112) that is already attached to the power tool and also has an existing backing washer or otherwise suitable supporting face (not shown). A friction washer (113) made from slightly porous sintered steel impregnated with a friction-enhancing chemical, and slightly harder than the saw blade, is placed against the front of the blade. Both the side of the washer in contact with the blade and the side surface of the blade itself are smooth.

On the reverse of the washer there are four shallow semi-circular cam ramps (118). The outer form of the washer is shaped as a hexagon so that it can be gripped if necessary. A quick release nut (114), made with hard brass, bronze or reinforced plastic, or some combination of such materials, has a ribbed outer ring to act as a finger or spanner grip. There are two dogs or raised engagement devices (115) within the bore of the nut. These are closely sized to engage into matched slots (116) in the shaft as the nut is pushed onto the shaft. The nut is then turned in the opposite direction of rotation to the saw blade when cutting, and the location dogs slide and locate in the undercuts (117) to prevent the nut pulling off the shaft. This should be a good snug fit without lateral axial movement. As drive is applied, the nut is driven hard into the shaft undercuts, and therefore it cannot fly off during normal use.

On the rear face of the quick release nut there is another series of four shallow ramps (not shown), and these match and engage with those similar cams on the washer (118). After assembly of the saw blade, washer and nut onto the shaft, the saw blade may still be quite loose. As power is applied the shaft will rotate the nut, driven by its positive location on/in the shaft undercut. Because of inertia the cams slide, and thrust the washer hard onto the blade. Rubbing occurs between the smooth face of the washer and the blade, and friction rapidly rises. As friction rises, a drag results that causes the washer to slip further against the quick release nut, and the cam action of the ramps forces the washer ever harder against the blade, thus increasing friction until all slip is eliminated. The copper-carrying nut ensures the cam faces will slide freely one against the other despite the presence of a friction-enhancing chemical. As cutting commences some further slip might occur, and this will cause a yet further adjustment of the cams, thus increasing pressure and friction until slip is eliminated.

Upon switching off the drive motor the motor usually stops rapidly, perhaps because it has less inertia or greater braking than the blade. Thus, the motor tries to stop before the blade, and the continuing motion of the blade drives the cams in reverse, and so relaxes pressure and the friction grip of the washer on the blade. Optionally, this automatic action will relieve the tightness to a point where the nut can generally be undone and removed by hand.

In practice it may be beneficial to treat the saw blade (111) in the areas where it contacts the drive washers both front and rear with a friction-enhancing treatment. This has the additional benefit of removing contaminants and rust, or rust inhibitor from the blade. Good frictional contact between metals is always dependant on the metals being clean.

Figures 7C,D show an alternative arrangement that utilises a similar principle and is designed for use with most existing portable rotary saw tools where the blade is retained with a single bolt at its centre threaded into the end of the drive shaft. Usually the hole at the centre of the saw blade is round, and the blade locates and centres on a smooth section of the motor shaft, supported front and back by substantial washers gripped by the single bolt.

The common designs depend on dry friction to couple the drive torque from the shaft to the saw blade. As a result, the single bolt needs to be secured very tightly, and thus is often extremely difficult to loosen, which makes changing wheels difficult. In some more expensive designs either eccentric holes or patterned holes are made in the saw blade that positively locate onto the drive shaft. Saw blades designed for cutting metals often have a round centre hole for location and four smaller planetary holes that locate onto drive pins.

As can be seen from Figure 7C, the blade (120) has a round centre hole (121). A cam washer (123) has a flat rear side that is placed against the smooth blade surface to form the friction-coupling area. The washer is hard steel, conveniently sintered to leave some porosity into which the friction-enhancing chemical is impregnated (the sintered steel should contain no more than 1% copper, or more preferably should use a nickel alloying agent). On the front (the side visible in Figure 7C) there are four shallow ramps or cams. These mesh with four identical cams (127: these cannot been seen in the view) on the reverse side of the hand wheel knob (124). These cams should be of hard brass, bronze or sintered steel with at least 5% copper, to ensure they slide freely. The hand screw shaft has a precisely-machined parallel land (126) adjacent to the head and before the threaded section, and this locates into the centre bore of the saw blade to hold it on centre. The screw thread passes through the assembly to engage in a threaded recess at the end of the tool drive shaft (not shown).

The assembly is tightened as firmly as possible by hand - Figure 7D shows the hand screw tightened down - after which the blade will still be relatively loose. Upon applying power the motor snatches, and the shaft turns but the blade drags. The cam action is operated when the blade slips relative the knob that is coupled to the motor. The cams press the washer tightly onto the blade to increase friction and eliminate slip. Any slip that occurs during subsequent cutting causes the cam action to apply ever greater force onto the blade to eliminate the slip. Upon switching off, the motor will stop rapidly while the inertia in the blade tries to keep it turning. Thus, the cam action of the washer reverses and relaxes the grip on the saw blade somewhat, so that freeing and removing the hand knob can usually be done by hand and without the need to use a spanner.

If desired the cam washer can be permanently attached to the knob by means of a captive moulding. This has the advantage of creating a dust screen for the critical cam faces. For satisfactory operation it is important that the friction surfaces are maintained clean and free of oil and corrosion. It is beneficial to treat the area of the blade under the friction washer with a friction-enhancing chemical.

The same principles apply to attaching other disc or wheel tools such as flap and buffing wheels, wire brushes, grinding wheels, especially those using a steel former, and angle grinder discs.

## Claims

1. A method of improving the performance of an object-gripping tool of the type wherein the object (1, 19, 30, 32, 34, 35, 53, 63, 111, 402) is held within a bounded object space in the tool by a gripper (2, 17, 26, 27, 33, 50, 61, 94, 113, 401) element operated by a cam (3, 18, 25, 52, 62, 81, 91, 119, 403) device acting as a brace for the gripper element (2, 17, 26, 27, 33, 50, 61, 94, 113, 401), **characterised in that**
there is applied to the relevant gripper (2, 17, 26, 27, 33, 50, 61, 94, 113, 401) surface a friction-enhancing chemical such as to cause this surface to have between it and whatever it touches a similar or higher dynamic than static coefficient of friction.

2. A method of gripping objects in which there is used an apparatus that includes
a body (4, 18, 51, 102, 112, 409),
an object space associated with the body (4, 18, 51, 102, 112, 409) and in which the object (1, 19, 30, 32, 34, 35, 53, 63, 111, 402) to be gripped is to be positioned, the object space having bounds restricting movement of an object (1, 19, 30, 32, 34, 35, 53, 63, 111, 402) therein,
a gripper (2, 17, 26, 27, 33, 50, 61, 94, 113, 401) element mounted on the body (4, 18, 51, 102, 112, 409) for movement relative thereto toward the object space, [so as to grip an object (1, 19, 30, 32, 34, 35, 53, 63, 111, 402) positioned in the object space],
a cam (3, 18, 25, 52, 62, 81, 91, 119, 403) device carried by the body (4, 18, 51, 102, 112, 409) and including a cam member having a cam surface bearing on the gripper (2, 17, 26, 27, 33, 50, 61, 94, 113, 401) element and operable, upon the application of an operating force to the cam (3, 18, 25, 52, 62, 81, 91, 119, 403) device, to move the gripper (2, 17, 26, 27, 33, 50, 61, 94, 113, 401) element toward the object space and then act as a brace for the gripper (2, 17, 26, 27, 33, 50, 61, 94, 113, 401) element, and
means for applying operating force to the cam (3, 18, 25, 52, 62, 81, 91, 119, 403) device,
the relevant gripper (2, 17, 26, 27, 33, 50, 61, 94, 113, 401) element surface having between it and whatever it touches a similar or higher dynamic than static coefficient of friction, and in which method the object (1, 19, 30, 32, 34, 35, 53, 63, 111, 402) to be gripped is positioned in the object space of the apparatus and the requisite operating force is applied to the cam (3, 18, 25, 52, 62, 81, 91, 119, 403) device such that the cam member bears against the gripper (2, 17, 26, 27, 33, 50, 61, 94, 113, 401) element so as to urge the gripper (2, 17, 26, 27, 33, 50, 61, 94, 113, 401) element into gripping contact with the object (1, 19, 30, 32, 34, 35, 53, 63, 111, 402), to act as a brace and to press the gripper (2, 17, 26, 27, 33, 50, 61, 94, 113, 401) between the cam (3, 18, 25, 52, 62, 81, 91, 119, 403) member and the object (1, 19, 30, 32, 34, 35, 53, 63, 111, 402) only so long as the force is applied.

3. A method as claimed in either of the preceding Claims in which the relevant gripper (2, 17, 26, 27, 33, 50, 61, 94, 113, 401) element surface is the object (1, 19, 30, 32, 34, 35, 53, 63, 111, 402)-touching surface.

4. A method as claimed in either of the preceding Claims, in which the relevant gripper (2, 17, 26, 27, 33, 50, 61, 94, 113, 401) element surface is the cam-touching surface, and in which there are also so treated the cam (3, 18, 25, 52, 62, 81, 91, 119, 403) surfaces and the cam-touching body (4, 18, 51, 102, 112, 409) surface.

5. A method as claimed in any of the preceding Claims, in which the chemical used for friction enhancement is a siloxane.

6. A method as claimed in Claim 5, in which the siloxane is one wherein single hydrogen atoms are used as side groups

7. A method as claimed in Claim 6, in which the siloxane is a polydimethylhydrogen siloxane having a viscosity of 30 mm²/s.

8. Apparatus for gripping objects (1, 19, 30, 32, 34, 35, 53, 63, 111, 402), which apparatus includes
a body (4, 18, 51, 102, 112, 409),
an object space associated with the body (4, 18, 51, 102, 112, 409) and in which the objects(1, 19, 30, 32, 34, 35, 53, 63, 111, 402) to be gripped are to be positioned, the object space having bounds restricting movement of objects (1, 19, 30, 32, 34, 35, 53, 63, 111, 402) therein,
a gripper (2, 17, 26, 27, 33, 50, 61, 94, 113, 401) element mounted on the body (4, 18, 51, 102, 112, 409) for movement relative thereto toward the object space, [so as to grip an object (1, 19, 30, 32, 34, 35, 53, 63, 111, 402) positioned in the object space],
a cam (3, 18, 25, 52, 62, 81, 91, 119, 403) device carried by the body (4, 18, 51, 102, 112, 409) and including a cam (3, 18, 25, 52, 62, 81, 91, 119, 403) member having a cam surface bearing on the gripper (2, 17, 26, 27, 33, 50, 61, 94, 113, 401) element and operable, upon the application of an operating force to the cam (3, 18, 25, 52, 62, 81, 91, 119, 403) device, to move the gripper (2, 17, 26, 27, 33, 50, 61, 94, 113, 401) element toward the object space and then act as a brace for the gripper (2, 17, 26, 27, 33, 50, 61, 94, 113, 401) element, and means for applying operating force to the cam (3, 18, 25, 52, 62, 81, 91, 119, 403) device,
**characterised in that**
the relevant gripper (2, 17, 26, 27, 33, 50, 61, 94, 113, 401) element surface has between it and whatever it touches a similar or higher dynamic than static coefficient of friction.

9. Apparatus as claimed in 8 wherein the relevant gripper (2, 17, 26, 27, 33, 50, 61, 94, 113, 401) element surface is the cam (3, 18, 25, 52, 62, 81, 91, 119, 403)-touching surface, and the apparatus is a spanner (100), a chuck (410) or a coupling 36.

10. Apparatus as claimed in Claim 8 wherein the relevant gripper (113, 123) element surface is the object (111, 120) touching surface and the apparatus is a clamp (114, 124) for holding a flat rotating disc like tool (111,120).

11. Apparatus as claimed in any of Claims 8 to 10, wherein there is a multiplicity of gripper elements (2, 17, 26, 27, 33, 50, 61, 94, 113, 401).

12. Apparatus as claimed in any of Claims 8, 9, and 11 wherein each gripper element (2, 17, 26, 27, 33, 50, 61, 401) is a simple cylinder (a short circular rod) that in operation of the apparatus is rolled into position then jammed between the object (1, 6, 13, 19, 30, 32, 34, 35, 53, 63, 67, 85, 86, 402) and cam (3, 9, 15, 20, 25, 52, 61, 81, 403).

13. Apparatus as claimed in Claim 10, wherein each gripper element is a flat washer (113, 123) for bearing against and one or both sides of a flat object like a rotating tool like a saw blade (111, 120).

14. Apparatus as claimed in any of Claims 8 to 13, wherein the or each gripper element (2, 17, 26, 27, 33, 50, 61, 80, 83, 94, 113, 123, 401) is a porous sintered hard steel impregnated with the friction-enhancing material.

15. Apparatus as claimed in any of Claims 8 to 14, wherein the or each gripper element (2, 7, 14, 17, 26, 27, 33, 50, 62, 80, 83, 94, 401) is arranged axially along, or radially around (113, 123), or pressed against a side face of (94, 111, 120), the item being gripped, and there is at least one such gripper element (2, 7, 14, 17, 26, 27, 50, 62, 80, 83, 94, 113, 123, 401) that is free to move along at least one axis, guided first then pressed by a cam device (3, 9, 15, 20, 25, 52, 61, 81, 91,119, 127, 403) against the item being gripped (1, 6, 13, 19, 30, 32, 34, 35, 53, 63, 67, 85, 86, 111, 120, 402).

16. Apparatus as claimed in any of Claims 8 to 15, wherein the cam (3, 9, 15, 20, 25, 52, 61, 81, 91, 119, 127, 403) bearing surfaces are smooth, and comprise flats or curves so configured as to form a fine variable positioning mechanism to move and control the gripper (2, 7, 14, 17, 26, 27, 50, 62, 80, 83, 94, 113, 123, 401) by moving against similar smooth surfaces on the gripper (2, 7, 14, 17, 26, 27, 50, 62, 80, 83, 94, 113, 123, 401).

17. Apparatus as claimed in any of claims 8 to 16 wherein the dynamic friction between the relevant gripper (2, 7, 14, 17, 26, 27, 50, 62, 80, 83, 94, 113, 123, 401) element surface and whatever it touches has been improved by the method as claimed in any of the claims of 1 to 7 so as to be similar or higher than the static coefficient of friction.

## Patentansprüche

1. Verfahren zum Verbessern der Leistung eines Gegenstandseinspannwerkzeugs des Typs, bei dem der Gegenstand (1, 19, 30, 32, 34, 35, 53, 63, 111, 402) von einem Einspann-(2, 17, 26, 27, 33, 50, 61, 94, 113, 401)-element, das von einer Nocken-(3, 18, 25, 52, 62, 81, 91, 119, 403)-vorrichtung betätigt wird, die als Absteifung für das Einspannelement (2, 17, 26, 27, 33, 50, 61, 94, 113, 401) wirkt, in einer eingegrenzten Gegenstandsaufnahme in dem Werkzeug gehalten wird, **dadurch**
**gekennzeichnet, dass**
auf die relevante Einspann-(2, 17, 26, 27, 33, 50, 61, 94, 113, 401)-fläche ein reibungsverbessernder chemischer Stoff aufgetragen wird, so dass bewirkt wird, dass diese Oberfläche zwischen sich und jeder beliebigen von ihr berührten Fläche einen Gleitreibungskoeffizienten hat, der ähnlich dem Haftreibungskoeffizienten oder größer als dieser ist.

2. Verfahren zum Einspannen von Gegenständen, bei dem eine Vorrichtung verwendet wird, die Folgendes umfasst:
einen Körper (4, 18, 51, 102, 112, 409),
eine Gegenstandsaufnahme, die mit dem Körper (4, 18, 51, 102, 112, 409) assoziiert ist und in der der einzuspannende Gegenstand (1, 19, 30, 32, 34, 35, 53, 63, 111, 402) zu positionieren ist, wobei die Gegenstandsaufnahme Begrenzungen hat, die die Bewegungen eines Gegenstands (1, 19, 30, 32, 34, 35, 53, 63, 111, 402) in ihr einschränken,
ein an dem Körper (4, 18, 51, 102, 112, 409) angebrachtes Einspann-(2, 17, 26, 27, 33, 50, 61, 94, 113, 401)-element zum Bewegen relativ dazu in Richtung auf die Gegenstandsaufnahme [um einen in der Gegenstandsaufnahme positionierten Gegenstand (1, 19, 30, 32, 34, 35, 53, 63, 111, 402) einzuspannen],
eine Nocken-(3, 18, 25, 52, 62, 81, 91, 119, 403)-vorrichtung, die von dem Körper (4, 18, 51, 102, 112, 409) getragen wird und ein Nockenelement hat, das eine auf dem Einspann-(2, 17, 26, 27, 33, 50, 61, 94, 113, 401)-element aufliegende Nockenfläche aufweist und die Aufgabe hat, das Einspann-(2, 17, 26, 27, 33, 50, 61, 94, 113, 401)-element bei Übertragung einer Betätigungskraft auf die Nocken-(3, 18, 25, 52, 62, 81, 91, 119, 403)-vorrichtung in Richtung auf die Gegenstandsaufnahme zu bewegen und dann als Absteifung für das Einspann-(2, 17, 26, 27, 33, 50, 61, 94, 113, 401)-element zu wirken, und
ein Mittel zum Übertragen von Betätigungskraft auf die Nocken-(3, 18, 25, 52, 62, 81, 91, 119, 403)-vorrichtung,
wobei die relevante Einspann-(2, 17, 26, 27, 33, 50, 61, 94, 113, 401)-elementfläche zwischen sich und jeder beliebigen von ihr berührten Fläche einen Gleitreibungskoeffizienten hat, der ähnlich dem Haftreibungskoeffizienten oder größer als dieser ist, und wobei bei diesem Verfahren der einzuspannende Gegenstand (1, 19, 30, 32, 34, 35, 53, 63, 111, 402) in der Gegenstandsaufnahme der Vorrichtung positioniert wird und die erforderliche Betätigungskraft auf die Nocken-(3, 18, 25, 52, 62, 81, 91, 119, 403)-vorrichtung übertragen wird, so dass das Nockenelement auf dem Einspann-(2, 17, 26, 27, 33, 50, 61, 94, 113, 401)-element aufliegt, um das Einspann-(2, 17, 26, 27, 33, 50, 61, 94, 113, 401)-element in Einspannkontakt mit dem Gegenstand (1, 19, 30, 32, 34, 35, 53, 63, 111, 402) zu drängen, um als Absteifung zu wirken und um den Einspanner (2, 17, 26, 27, 33, 50, 61, 94, 113, 401) nur so lange zwischen das Nocken-(3, 18, 25, 52, 62, 81, 91, 119, 403)-element und den Gegenstand (1, 19, 30, 32, 34, 35, 53, 63, 111, 402) zu pressen, wie die Kraft übertragen wird.

3. Verfahren nach einem der vorhergehenden Ansprüche, bei dem die relevante Einspann-(2, 17, 26, 27, 33, 50, 61, 94, 113, 401)-elementfläche die den Gegenstand (1, 19, 30, 32, 34, 35, 53, 63, 111, 402) berührende Fläche ist.

4. Verfahren nach einem der vorhergehenden Ansprüche, bei dem die relevante Einspann-(2, 17, 26, 27, 33, 50, 61, 94, 113, 401)-elementfläche die nockenberührende Fläche ist und bei dem auch die Nocken-(3, 18, 25, 52, 62, 81, 91, 119, 403)-flächen und die nockenberührende Fläche des Körpers (4, 18, 51, 102, 112, 409) so behandelt werden.

5. Verfahren nach einem der vorhergehenden Ansprüche, bei dem der für die Reibungsverbesserung verwendete chemische Stoff ein Siloxan ist.

6. Verfahren nach Anspruch 5, bei dem das Siloxan eine Siloxan ist, bei dem einzelne Wasserstoffatome als Seitengruppen verwendet werden.

7. Verfahren nach Anspruch 6, bei dem das Siloxan ein Polydimethyl-Wasserstoff-Siloxan mit einer Viskosität von 30 mm²/s ist.

8. Vorrichtung zum Einspannen von Gegenständen (1, 19, 30, 32, 34, 35, 53, 63, 111, 402), wobei die Vorrichtung Folgendes aufweist:
einen Körper (4, 18, 51, 102, 112, 409),
eine Gegenstandsaufnahme, die mit dem Körper (4, 18, 51, 102, 112, 409) assoziiert ist und in der die einzuspannenden Gegenstände (1, 19, 30, 32, 34, 35, 53, 63, 111, 402) zu positionieren sind, wobei die Gegenstandsaufnahme Begrenzungen hat, die die Bewegungen von Gegenständen (1, 19, 30, 32, 34, 35, 53, 63, 111, 402) in ihr einschränken,
ein an dem Körper (4, 18, 51, 102, 112, 409) angebrachtes Einspann-(2, 17, 26, 27, 33, 50, 61, 94, 113, 401)-element zum Bewegen relativ dazu in Richtung auf die Gegenstandsaufnahme [um einen in der Gegenstandsaufnahme positionierten Gegenstand (1, 19, 30, 32, 34, 35, 53, 63, 111, 402) einzuspannen],
eine Nocken-(3, 18, 25, 52, 62, 81, 91, 119, 403)-vorrichtung, die von dem Körper (4, 18, 51, 102, 112, 409) getragen wird und ein Nocken-(3, 18, 25, 52, 62, 81, 91, 119, 403)-element hat, das eine auf dem Einspann-(2, 17, 26, 27, 33, 50, 61, 94, 113, 401)-element aufliegende Nockenfläche aufweist und die Aufgabe hat, das Einspann-(2, 17, 26, 27, 33, 50, 61, 94, 113, 401)-element bei Übertragung einer Betätigungskraft auf die Nocken-(3, 18, 25, 52, 62, 81, 91, 119, 403)-vorrichtung in Richtung auf die Gegenstandsaufnahme zu bewegen und dann als Absteifung für das Einspann-(2, 17, 26, 27, 33, 50, 61, 94, 113, 401)-element zu wirken, und ein Mittel zum Übertragen von Betätigungskraft auf die Nocken-(3, 18, 25, 52, 62, 81, 91, 119, 403)-vorrichtung,
**dadurch gekennzeichnet, dass**
die relevante Einspann-(2, 17, 26, 27, 33, 50, 61, 94, 113, 401)-elementfläche zwischen sich und jeder beliebigen von ihr berührten Fläche einen Gleitreibungskoeffizienten hat, der ähnlich dem Haftreibungskoeffizienten oder größer als dieser ist.

9. Vorrichtung nach Anspruch 8, bei der die relevante Einspann-(2, 17, 26, 27, 33, 50, 61, 94, 113, 401)-elementfläche die nocken-(3, 18, 25, 52, 62, 81, 91, 119, 403)-berührende Fläche ist und die Vorrichtung ein Schraubenschlüssel (100), ein Spannfutter (410) oder eine Kupplung 36 ist.

10. Vorrichtung nach Anspruch 8, bei dem die relevante Einspann-(113, 123)-elementfläche die Gegenstands-(111,120)-berührende Fläche ist und die Vorrichtung eine Klemmvorrichtung (114, 124) zum Festhalten eines flachen rotierenden scheibenartigen Werkzeugs (111,120) ist.

11. Vorrichtung nach einem der Ansprüche 8 bis 10, die eine Mehrzahl von Einspannelementen (2, 17, 26, 27, 33, 50, 61, 94, 113, 401) aufweist.

12. Vorrichtung nach einem der Ansprüche 8, 9 und 11, bei der jedes Einspannelement (2, 17, 26, 27, 33, 50, 61, 401) ein einfacher Zylinder (ein kurzer kreisförmiger Stab) ist, der bei Betrieb der Vorrichtung in Position gerollt und dann zwischen Gegenstand (1, 6, 13, 19, 30, 32, 34, 35, 53, 63, 67, 85, 86, 402) und Nocken (3, 9, 15, 20, 25, 52, 61, 81, 403) eingeklemmt wird.

13. Vorrichtung nach Anspruch 10, bei der jedes Einspannelement eine flache Zwischenscheibe (113, 123) zum Anliegen an einer oder beiden Seiten eines flachen Gegenstands wie einem rotierenden Werkzeug wie einem Sägeblatt (111, 120) aufweist.

14. Vorrichtung nach einem der Ansprüche 8 bis 13, bei der das oder jedes Einspannelement (2, 17, 26, 27, 33, 50, 61, 80, 83, 94, 113, 123, 401) ein mit dem reibungsverbessernden Material imprägnierter poröser Sinterhartstahl ist.

15. Vorrichtung nach einem der Ansprüche 8 bis 14, bei der das oder jedes Einspannelement (2, 7, 14, 17, 26, 27, 33, 50, 62, 80, 83, 94, 401) axial entlang oder radial um (113, 123) eine Seitenfläche (94, 111, 120) des eingespannten Artikels angeordnet ist oder gegen sie gepresst wird und es wenigstens ein derartiges Einspannelement (2, 7, 14, 17, 26, 27, 50, 62, 80, 83, 94, 113, 123, 401) gibt, das sich frei an wenigstens einer Achse entlang bewegen kann, wobei es von einer Nockenvorrichtung (3, 9, 15, 20, 25, 52, 61, 81, 91,119, 127, 403) zunächst geführt und dann gegen den eingespannten Artikel (1, 6, 13, 19, 30, 32, 34, 35, 53, 63, 67, 85, 86, 111, 120, 402) gepresst wird.

16. Vorrichtung nach einem der Ansprüche 8 bis 15, bei der die Lagerflächen der Nocken (3, 9, 15, 20, 25, 52, 61, 81, 91, 119, 127, 403) glatt sind und Flachstellen oder Kurven aufweisen, die so konfiguriert sind, dass sie einen fein verstellbaren Positionierungsmechanismus zum Bewegen und Steuern des Einspanners (2, 7, 14, 17, 26, 27, 50, 62, 80, 83, 94, 113, 123, 401) durch Bewegen gegen ähnliche glatte Oberflächen an dem Einspanner (2, 7, 14, 17, 26, 27, 50, 62, 80, 83, 94, 113, 123, 401) bilden.

17. Vorrichtung nach einem der Ansprüche 8 bis 16, bei dem die Gleitreibung zwischen der relevanten Einspann-(2, 7, 14, 17, 26, 27, 50, 62, 80, 83, 94, 113, 123, 401)-elementfläche und jeder beliebigen von ihr berührten Fläche durch das Verfahren nach einem der Ansprüche 1 bis 7 verbessert wurde, um ähnlich dem Haftreibungskoeffizienten oder größer als dieser zu sein.

## Revendications

1. Procédé d'amélioration de la performance d'un outil de serrage d'objet du type dans lequel l'objet (1, 19, 30, 32, 34, 35, 53, 63, 111, 402) est maintenu à l'intérieur d'un espace d'objet borné dans l'outil par un élément de serrage (2, 17, 26, 27, 33, 50, 61, 94, 113, 401) actionné par un dispositif de came (3, 18, 25, 52, 62, 81, 91, 119, 403) servant de renfort à l'élément de serrage (2, 17, 26, 27, 33, 50, 61, 94, 113, 401), **caractérisé en ce que**
un produit chimique d'amélioration de frottement est appliqué sur la surface de pince (2, 17, 26, 27, 33, 50, 61, 94, 113, 401) pertinente, de façon à faire en sorte que cette surface ait entre elle et ce qu'elle touche un coefficient de frottement dynamique semblable ou supérieur au coefficient de frottement statique.

2. Procédé de serrage d'objets, dans lequel est utilisé un appareil qui comporte
un corps (4, 18, 51, 102, 112, 409),
un espace d'objet associé au corps (4, 18, 51, 102, 112, 409) et dans lequel l'objet (1, 19, 30, 32, 34, 35, 53, 63, 111, 402) à serrer doit être placé, l'espace d'objet ayant des bornes limitant le mouvement d'un objet (1, 19, 30, 32, 34, 35, 53, 63, 111, 402) à l'intérieur de celui-ci,
un élément de serrage (2, 17, 26, 27, 33, 50, 61, 94, 113, 401) monté sur le corps (4, 18, 51, 102, 112, 409) afin de se déplacer relativement à celui-ci vers l'espace d'objet [de façon à serrer un objet (1, 19, 30, 32, 34, 35, 53, 63, 111, 402) positionné dans l'espace d'objet],
un dispositif de came (3, 18, 25, 52, 62, 81, 91, 119, 403) porté par le corps (4, 18, 51, 102, 112, 409) et comportant un élément de came ayant une surface de came portant sur l'élément de serrage (2, 17, 26, 27, 33, 50, 61, 94, 113, 401) et actionnable, à l'application d'une force de commande sur le dispositif de came (3, 18, 25, 52, 62, 81, 91, 119, 403), afin de déplacer l'élément de serrage (2, 17, 26, 27, 33, 50, 61, 94, 113, 401) vers l'espace d'objet et ainsi servir de renfort à l'élément de serrage (2, 17, 26, 27, 33, 50, 61, 94, 113, 401), et
un moyen pour appliquer une force de commande au dispositif de came (3, 18, 25, 52, 62, 81, 91, 119, 403),
la surface pertinente de l'élément de serrage (2, 17, 26, 27, 33, 50, 61, 94, 113, 401) ayant entre elle et ce qu'elle touche un coefficient de frottement dynamique semblable ou supérieur au coefficient de frottement statique, et procédé dans lequel l'objet (1, 19, 30, 32, 34, 35, 53, 63, 111, 402) à serrer est placé dans l'espace d'objet de l'appareil et la force de commande nécessaire est appliquée sur le dispositif de came (3, 18, 25, 52, 62, 81, 91, 119, 403) de telle sorte que l'élément de came porte contre l'élément de serrage (2, 17, 26, 27, 33, 50, 61, 94, 113, 401) de façon à pousser l'élément de serrage (2, 17, 26, 27, 33, 50, 61, 94, 113, 401) en un contact de serrage avec l'objet (1, 19, 30, 32, 34, 35, 53, 63, 111, 402), à servir de renfort et à presser l'élément de serrage (2, 17, 26, 27, 33, 50, 61, 94, 113, 401) entre l'élément de came (3, 18, 25, 52, 62, 81, 91, 119, 403) et l'objet (1, 19, 30, 32, 34, 35, 53, 63, 111, 402) uniquement tant que la force est appliquée.

3. Procédé selon l'une quelconque des revendications précédentes, dans lequel la surface pertinente de l'élément de serrage (2, 17, 26, 27, 33, 50, 61, 94, 113, 401) est la surface en contact avec l'objet (1,19, 30, 32, 34, 35, 53, 63,111,402).

4. Procédé selon l'une quelconque des revendications précédentes, dans lequel la surface pertinente de l'élément de serrage (2, 17, 26, 27, 33, 50, 61, 94, 113, 401) est la surface de contact avec la came, et dans lequel les surfaces de came (3, 18, 25, 52, 62, 81, 91, 119, 403) et la surface du corps en contact avec la came (4, 18, 51, 102, 112, 409) sont également traitées de la même façon.

5. Procédé selon l'une quelconque des revendications précédentes dans lequel le produit chimique utilisé pour l'amélioration du frottement est un siloxane.

6. Procédé selon la Revendication 5 dans lequel le siloxane est un siloxane où les atomes d'hydrogène uniques sont utilisés comme groupes latéraux.

7. Procédé selon la Revendication 6, dans lequel le siloxane est un siloxane de polydiméthyle d'hydrogène ayant une viscosité de 30 mm²/s.

8. Appareil de serrage d'objets (1, 19, 30, 32, 34, 35, 53, 63, 111, 401), lequel appareil comporte
un corps (4, 18, 51, 102, 112, 409),
un espace d'objet associé au corps (4, 18, 51, 102, 112, 409) et dans lequel les objets (1, 19, 30, 32, 34, 35, 53, 63, 111, 402) à serrer doivent être placés, l'espace d'objet ayant des bornes limitant le mouvement des objets (1, 19, 30, 32, 34, 35, 53, 63, 111, 402) à l'intérieur de celui-ci,
un élément de serrage (2, 17, 26, 27, 33, 50, 61, 94, 113, 401) monté sur le corps (4, 18, 51, 102, 112, 409) afin de se déplacer relativement à celui-ci vers l'espace d'objet [de façon à serrer un objet (1, 19, 30, 32, 34, 35, 53, 63, 111, 402) positionné dans l'espace d'objet],
un dispositif de came (3, 18, 25, 52, 62, 81, 91, 119, 403) porté par le corps (4, 18, 51, 102, 112, 409) et comportant un élément de came (3, 18, 25, 52, 62, 81, 91, 199, 403) ayant une surface de came portant sur l'élément de serrage (2, 17, 26, 27, 33, 50, 61, 94, 113, 401) et actionnable, à l'application d'une force de commande sur le dispositif de came (3, 18, 25, 52, 62, 81, 91, 119, 403), afin de déplacer l'élément de serrage (2, 17, 26, 27, 33, 50, 61, 94, 113, 401) vers l'espace d'objet et ainsi servir de renfort à l'élément de serrage (2, 17, 26, 27, 33, 50, 61,94,113, 401), et un moyen pour appliquer une force de commande au dispositif de came (3, 18, 25, 52, 62, 81, 91, 119, 403),
**caractérisé en ce que**
la surface pertinente de l'élément de serrage (2, 17, 26, 27, 33, 50, 61, 94, 113, 401) a entre elle et ce qu'elle touche un coefficient de frottement dynamique semblable ou supérieur au coefficient de frottement statique.

9. Appareil selon la Revendication 8, dans lequel la surface pertinente de l'élément de serrage (2, 17, 26, 27, 33, 50, 61, 94, 113, 401) constitue la surface de contact avec la came (3, 18, 25, 52, 62, 81, 91, 119, 403), et l'appareil est une clé (100), un mandrin (410) ou un accouplement 36.

10. Appareil selon la Revendication 8, dans lequel la surface pertinente d'élément de serrage (113, 123) constitue la surface de contact avec l'objet (111, 120) et l'appareil est une pince (114, 124) pour maintenir un outil du type à disque tournant plat (111, 120).

11. Appareil selon l'une quelconque des Revendications 8 à 10, dans lequel figure une multiplicité d'éléments de serrage (2, 17, 26, 27, 33, 50, 61, 94, 113, 401).

12. Appareil selon l'une quelconque des Revendications 8, 9 et 11, dans lequel chaque élément de serrage (2, 17, 26, 27, 33, 50, 61, 401) est un cylindre simple (une courte tige circulaire) qui, durant le fonctionnement de l'appareil, est roulé jusqu'à la position de serrage puis coincé entre l'objet (1, 6, 13, 19, 30, 32, 34, 35, 53, 63, 67, 85, 86, 402) et la came (3, 9, 15, 20, 25, 52, 61, 81, 403).

13. Appareil selon la Revendication 10, dans lequel chaque élément de serrage est une rondelle plate (113, 123) qui vient porter contre l'un ou les deux côtés d'un objet plat tel un outil rotatif comme une lame de scie (111, 120).

14. Appareil selon l'une quelconque des Revendications 8 à 13, dans lequel l'élément ou chaque élément de serrage (2, 17, 26, 27, 33, 50, 61, 80, 83, 94, 113, 123, 401) est un acier dur fritté poreux imprégné de la matière d'amélioration de frottement.

15. Appareil selon l'une quelconque des Revendications 8 à 14, dans lequel l'élément ou chaque élément de serrage (2, 7, 14, 17, 26, 27, 33, 50, 62, 80, 83, 94, 401) est agencé axialement le long de l'article serré, ou radialement autour (113, 123) de l'article serré, ou pressé contre une face latérale (94, 111, 120) de l'article serré, et il existe au moins un tel élément de serrage (2, 7, 14, 17, 26, 27, 50, 62, 80, 83, 94, 113, 123, 401) qui est libre de se déplacer le long d'au moins un axe, d'abord guidé puis pressé par un dispositif de came (3, 9, 15, 20, 25, 52, 61, 81, 91, 119, 127, 403) contre l'article serré (1, 6, 13, 19, 30, 32, 34, 35, 53, 63, 67, 85, 86, 111, 120, 402).

16. Appareil selon l'une quelconque des Revendications 8 à 15, dans lequel les surfaces porteuses de la came (3, 9, 15, 20, 25, 52, 61, 81, 91, 119, 127, 403) sont lisses, et comprennent des facettes ou courbes configurées de façon à former un mécanisme de positionnement variable fin pour déplacer et commander la pince (2, 7, 14, 17, 26, 27, 50, 62, 80, 83, 94, 113, 123, 401) par déplacement contre des surfaces lisses semblables sur la pince (2, 7, 14, 17, 26, 27, 50, 62, 80, 83, 94, 113, 123, 401).

17. Appareil selon l'une quelconque des Revendications 8 à 16, dans lequel le frottement dynamique entre la surface pertinente d'élément de serrage (2, 7, 14, 17, 26, 27, 50, 62, 80, 83, 94, 113, 123, 401) et ce qu'elle touche a été amélioré par le procédé selon l'une quelconque des Revendications 1 à 7 de façon à être semblable ou supérieur au coefficient de frottement statique.
